# EUROPEAN PATENT APPLICATION

(11) **EP 4 814 630 A1**
(43) Date of publication of application: **30.09.2026**
(21) Application number: 25166532.9
(22) Date of filing: 27.03.2025
(51) Int. Cl.: G05B 9/03, B60L 3/00, H04L 12/40, B60W 50/023

(54) **SYSTEM WITH A REDUNDANT ARCHITECTURE, RECEIVER MODULE AND SUPPLY ISOLATOR MODULE**

(71) Applicant: KB Intellectual Property GmbH & Co. KG, 82049 Pullach (DE)
(72) Inventor: GYURKO, Zoltán, 1047 Budapest (HU); UNGVÁRSZKY, Balázs, 1025 Budapest (HU); FERENCZ, Jozsef Zsolt, 1135 Budapest (HU); STRAUB, Kornel, 2013 Pomáz (HU); NEMETH, Huba, 1116 Budapest (HU); TOTH, Zoltan, 1046 Budapest (HU)

(57) **Abstract**

The present invention refers to a system (10) with a redundant architecture, in particular for vehicles, wherein the system (10) comprises a plurality of sender modules (20), a plurality of receiver modules (40) and a plurality of signal isolator modules (30), wherein the sender modules (20) and the receiver modules (40) are isolated from each other by the signal isolator modules (30). Further, the present invention refers to a receiver module (40) and a supply isolator module (50).

## Description

The present invention refers to a system with a redundant architecture, in particular for vehicles, and corresponding receiver module, signal isolator module and supply isolator module.

In a redundant safety-critical system, observing and measuring certain states of a system is a crucial part of achieving high level of safety. Some safety-critical parameters need to be measured to ensure that the system is operational and safe. In such systems to achieve full redundancy, the observation of the safety-critical parameters must also be redundant.

Such a redundant sensing system has usually multiple sensors for observing a signal and multiple receivers for collecting the data from each sensor. In case of receiving multiple signals for the purpose of redundancy a voting solution is commonly used.

Redundant safety-critical systems are designed to ensure the highest level of reliability and safety in applications where failure(s) need to be tolerated. These systems employ multiple layers of backup components, like sensors and electronic control units (ECUs), and processes known as redundancy, to provide fail-operational mechanisms that activate in the event of component failure(s). These systems ensure the uninterrupted operation by maintaining functionality in the case of failures as well.

The sensors play a vital role in these systems as providing real-time data that is critical for system awareness and decision-making. Thereby, such sensors not only provide feedback for ensuring normal operation but can also be a feedback for the redundant system when a failure happens.

The problem arises when sensors fail or provide unreliable data, potentially leading to catastrophic outcomes.

The object of the invention is to propose a system, in particular a redundant safety-critical system, which efficiently provides for sensor redundancy to ensure data accuracy, reliability, and safety, in particular being capable of detecting sensor anomalies and seamless engaging of backup sensors in order to ensure an uninterrupted operation for the system. Moreover, it is a further object of the invention to provide a corresponding receiver module as well as signal and supply isolator modules.

These objectives are resolved by a system according to independent claim 1, concerning a receiver module by independent claim 11 and concerning signal/supply isolator modules by independent claims 12 and 13. Preferred embodiments are addressed by the dependent claims respectively.

According to the present invention a system with and providing for a redundant architecture, in particular for vehicles, wherein the system comprises a plurality of sender modules, a plurality of receiver modules and a plurality of signal isolator modules, wherein each receiver module is configured to receive signals, in particular digital sensor signals or analogue sensor signals, from each of the sender modules, wherein the sender modules and the receiver modules are isolated, in particular galvanically isolated, from each other by one of the signal isolator modules.

In the context of the present invention the sender modules are preferably provided as sensors whereby the receiver modules are preferably provided as electronic control units.

The present invention is based on the idea to provide a redundant multiple sender (modules) and multiple receiver (modules) architecture, in particular a multiple sensor and multiple processing ECU architecture, whereby all ECUs receive data from all sensors through isolated interfaces to create a redundant signal processing system.

In addition, all senders/sensors may receive their power through all receivers/ECUs redundantly while being isolated.

This way, if any of the sensors fail it will not interfere the other sensors and all ECUs receive data from all operational sensors. As long as at least one sensor is still working, all ECUs receive data from that sensor. If any of the ECUs fail it will not interfere ECUs and all sensors will be powered and still working, as long as at least one ECU is working.

The simplest redundant architecture is if there are two sensors and two ECUs. Each sensor has a redundant, isolated power supply, where each ECU can supply the sensor simultaneously and independently. Each sensor also has as much signal isolator as much as ECUs, so that each ECU receives one signal per sensor while being galvanically isolated.

To detect sensor anomalies, the receiving ECUs need signals from all sensors to be able to detect, which is a faulty one from them. All sensor data are monitored in real-time, and the receiver ECU, by implementing e.g. a voting system, can ensure that only the correct sensor data is finally processed. Having multiple voting system with multiple receiver ECUs can ensure redundancy not only on sensor side but in the signal processing side as well. The architecture of such a system would involve multiple sensors, each with its output split and connected in a way that allows each ECU to collect data from each sensor.

To avoid a single-point failure by the sensor connections with multiple ECUs a (galvanic) splitting of each sensor's output at each ECU connection is required. In the event of an ECU's failure all the incoming sensor signal line to that ECU are at risk of failure as well.

This is a risk especially in systems where high-voltage supplies are mixed with low-voltage supplies. In this case, if the sensor's output signal is simply split galvanically between the ECUs, this can result in failure at all split signals, and consequently at all ECUs. This is why there should be some kind of galvanic isolation between the ECUs and the sensors. On the other hand, most sensors require some kind of power supply, where one commonly used solution is to have it supplied by the processing ECU itself. However, if there is no galvanic isolation between the sensor and the supplying ECU, a failure on one side can lead to a failure on the other side. A potential solution to this problem is to have each sensor redundantly supplied by each ECU, while ensuring galvanic isolation between each ECU's supply line as well as between the ECUs and the sensor itself.

By redundantly supplying each sensor with galvanic isolation through each ECUs with galvanic isolations between the ECUs and redundantly connecting each sensor's output to every ECU with galvanic isolation, the system according to the present invention permits any single component to fail regardless of its severity, while continuing its operation without interruption.

According to the present invention the sender modules and the receiver modules are isolated, in particular galvanically isolated, from each other by one of the signal isolator modules.

Hence, even if signals from all the sender modules/sensors are provided to each and every of the receiver modules/ECUs, an interference in case of any failure on side of the sender modules and/or the receiver modules with the remaining modules can be avoided and prevented.

According to one preferred embodiment each of the signal isolator modules is associated with one of the sender modules respectively.

Multiple signal isolator modules can be assigned to/associated with a single sender module in order to allow for an isolation of the corresponding signal path to the multiple receiver modules. Preferably, each sender module/sensor can be assigned to/associated with a number of signal isolator modules which equals the number of receiver modules/ECUs.

Hence, each and every signal line/path can be isolated between the sender modules and the receiver modules by the plurality of signal isolator modules.

Pursuant to another preferred embodiment, the system comprises a plurality of supply isolator modules, wherein one supply isolator module is associated with one sender module respectively.

Thus, an energy/power supply (line/path) for each of the sender modules can be provided with an isolation in a comparable way as for the signal line/path.

Namely, each sender module can be assigned to/associated with a supply isolator module in order to provide electrical protection. Thereby, multiple energy/power supply lines/paths can be connected to the respective supply isolator module, whereby such supply isolator module ensures and provides for electrically protected power/energy supply to the respective sender module.

According to another embodiment each sender module is configured to receive an energy/power supply via a supply connection from each of the receiver modules via one of the plurality of supply isolator modules, wherein such supply connection of each of the sender modules is isolated, in particular galvanically isolated, from the plurality of the receiver modules by one of the supply isolator modules.

In particular, each sender module can be provided with electrical energy by each and every of the receiver modules, namely in form of a galvanically isolated energy/power supply.

In another embodiment the sender modules are provided as sensors of the same or various types, wherein the receiver modules are provided as electronic control units of the same or various types.

Hence, the sender modules and the receiver modules can be provided in different forms and types respectively.

In another preferred embodiment the number of sender modules and receiver modules is different, wherein the system preferably comprises a larger amount of sender modules than of receiver modules.

In particular, a large amount of sender modules/sensors can be handled by multiple receiver modules/ECUs, whereby redundancy is provided by each sender module comprising an (galvanically) isolated signal path/line/connection to each of the receiver modules and an energy/power supply line/path/connection from each of the receiver modules to the sender modules is also (galvanically) isolated.

Alternatively, the system can be provided with an equal number of sender modules and receiver modules.

Pursuant to a further embodiment each receiver module has one common supply output or separate supply outputs for (energy) supply connection with the plurality of supply isolator modules.

In one preferred embodiment each receiver module is provided with
- one common ground connection or separate ground connections for connection with the plurality of signal isolator modules and/or
- one common ground connection or separate ground connections for connection with the plurality of supply isolator modules.

Hence, the system according to the present invention may be implemented with different configurations of (energy) supply outputs/ports and ground connection (ports) of the receiver modules/ECUs.

According to another embodiment each signal isolator module is supplied with energy by the plurality of receiver modules via one supply isolator module which is associated with the corresponding sender module.

Hence, energy/power supply to the signal isolator modules, in particular if being configured as digital signal isolator modules, can be provided in (galvanically) isolated manner via the respective supply isolator module being assigned to/associated with the same sender module/sensor.

According to the present invention, the redundant system architecture is provided with an electrically isolated design, preferably by galvanic isolation/separation, between the sender modules and the receiver modules in order to prevent any interference in case of failure of any component/module within the system.

Pursuant to a further preferred embodiment each of the signal isolator modules and/or the supply isolator modules are provided as an analogue isolator or as a digital isolator, preferably to provide a galvanic isolation.

Signal isolator modules can be digital isolators like optocouplers, capacitive or inductive isolators. If the signal isolator module is an analogue optical isolator, which uses a phototransistor as its output, then the power/energy supply and the signal/data transfer of the signal isolator module is on the same path/line/connection like the energy/power supply, this way simplifying the system.

According to another aspect of the invention a receiver module for a system according to the present invention is provided, wherein the receiver module is preferable an electronic control unit.

Moreover, a signal isolator module for a system according to the present invention is proposed, preferably providing a galvanic isolation. Additionally, a supply isolator module for a system according to the present invention is proposed, preferably providing a galvanic isolation.

All of the advantages and technical effects being described in the context of system can also be applied, individually or commonly, for the receiver module, the signal isolator module and/or the supply isolator module according to the present invention.

Further details and advantages of the present invention are explained and described in more detail in the context of the embodiment as illustrated by the enclosed figures.

It is schematically shown:
- Fig. 1: an overview of a system for providing a redundant architecture;
- Fig. 2: one embodiment of the system according to Fig. 1;
- Fig. 3: another embodiment of the system according to Fig. 1;
- Fig. 4: an embodiment of a signal isolator module as a digital isolator;
- Fig. 5: an embodiment of a signal isolator module as an analogue isolator;
- Fig. 6: embodiment of a receiver module comprising a common supply output and a common ground connection of the receiver module; and
- Fig. 7: embodiment of a receiver module comprising a separate supply output and separate common ground connection of the receiver module.

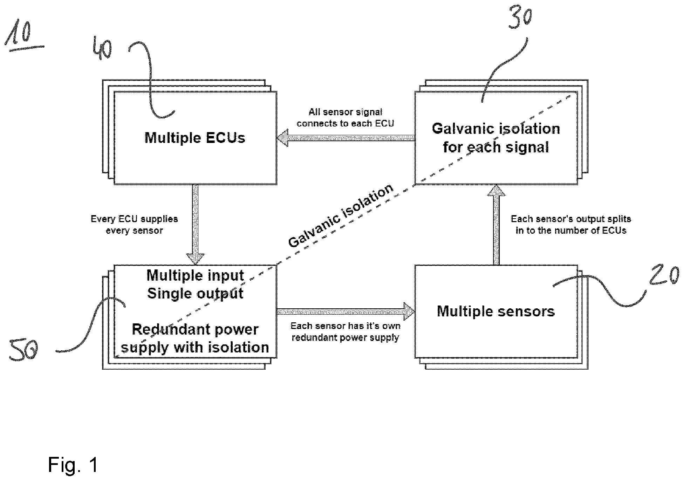

In Fig. 1 an overview of a system 10 with and for providing a redundant architecture, in particular of sender modules 20 and receiver modules 40.

According to Fig. 1, sensors may be provided as multiple sender modules 20 and ECUs may be provided as multiple receiver modules 40.

The signal/sensor output of the sender modules 20 is forwarded to the receiver modules 40 via a plurality of sender isolator modules 30, which provide a galvanic isolation.

Each signal/sensor output of the respective sender modules 20 is provided to each of the receiver modules 40, allowing for a redundancy of signal transmission.

Moreover, the plurality of sender modules 20 are provided with an energy/power supply by the plurality of receiver modules 40 via a plurality of supply isolator modules 50.

Each receiver module 40 may provide a power/energy supply line/connection/path to each of the sender modules, allowing for a redundancy of power/energy supply.

According to the system 10 in Fig. 1, a complete redundancy of signal transmission and power/energy supply between the sender modules 20 and the receiver modules 40 is provided in combination with a complete galvanic isolation such that failure of a single component cannot interfere or influence the rest of the system 10 and/or its functionality.

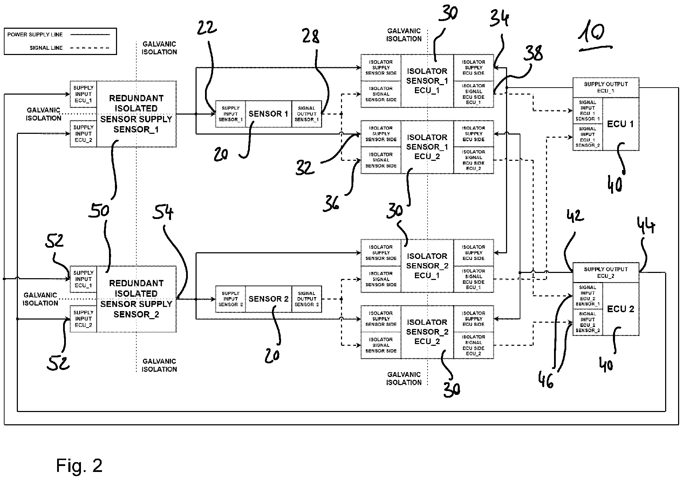

Fig. 2 illustrates one embodiment of the system according to Fig. 1.

The system 10 may be provided with two receiver modules/ECUs 40 and two sender modules/sensors 20.

In order to provide the signals from the sender modules 20 to the two receiver modules 40, each sender module 20 is associated with two signal isolator modules 30 for providing an isolated signal path/line to the receiver modules 40 respectively.

Moreover, each of the receiver modules 40 provides a power/energy supply line to each of the sender modules 20 via a correspondingly assigned supply isolator module 50. The power/energy supply by all of the receiver modules 40 is interconnected/combined by the supply isolator modules 50.

According to Fig. 1 there is an equal number of signal isolator modules 30 and receiver modules 40 in order to provide isolated signals from all of the sender modules 20 to each of the receiver modules. Moreover, there is an equal number of supply isolator modules 50 and sender modules 20 in order to provide an isolated energy supply by all of the receiver modules 40 to each of the sender modules 20.

In addition, the supply isolator modules 50 may further provide energy/power supply to the signal isolator modules 30 as well.

In more detail, according to Fig. 1, the receiver modules 40 may comprise at least one supply output 42 for connection with a supply input 34 of each of the signal isolator modules 30, at least one supply output 44 for connection with a supply input 52 of each of the supply isolator modules 50 and multiple signal inputs 46 for connection with signal outputs 38 of each of the signal isolator modules 30.

The supply isolator modules 50 may comprise multiple supply inputs 52, in particular for receiving energy/power from each of the receiving modules 40 and the corresponding supply output 44 respectively.

Such electrical energy is provided via at least one supply output 54 of the respective supply isolator module 50 to at least a supply input 22 of the associated/assigned sender module/sensor 20. Further, electrical energy from the at least one supply output 54 may also be provided to supply inputs 32 of the signal isolator modules 30 being associated with/assigned to the corresponding sender module 20, in particular in case of the signal isolator modules 30 being embodied as digital modules.

The sender modules/sensors may comprise one or multiple signal outputs 28 for connection with a signal input 36 of the associated/assigned signal isolator module 30.

Thus, the simplest redundant architecture of a system 10 is a combination with two sensors 20 and two ECUs 40. Each sensor 20 has a redundant, isolated power supply, where each ECU 40 can supply the sensor simultaneously and independently. Each sensor 20 also has as many signal isolator modules 30 as many ECUs 40 such that each ECU 40 receives one signal per sensor module 20 while being galvanically isolated.

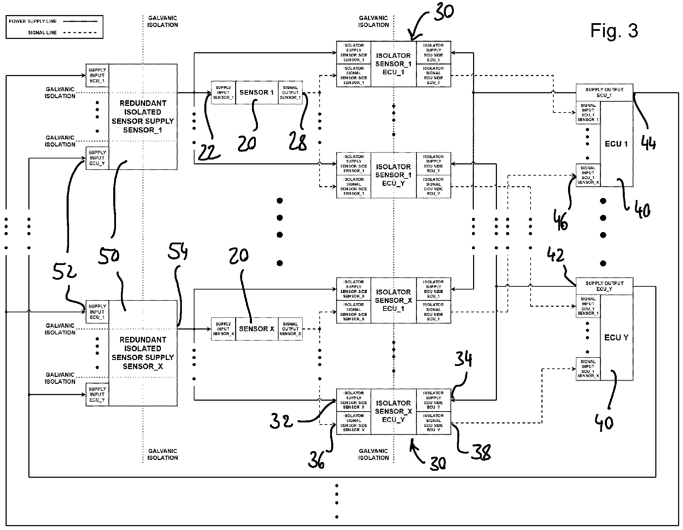

Fig. 3 depicts another embodiment of the system according to Fig. 1.

In comparison to the embodiment of Fig. 2, the architecture of the system 10 is very similar for more than two sender modules/ sensors 20 or more than two receiver modules/ECUs 40, as shown in Fig. 3.

The number of ECUs 40 is not necessarily the same as the number of sensors 20. As an example, if the system contains X number of sensors and Y number of ECUs the redundant architecture in Fig. 3 can be achieved.

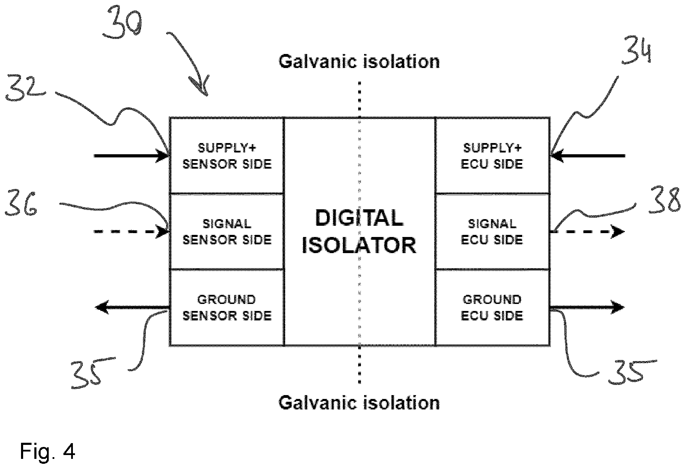

Fig. 4 illustrates an embodiment of a signal isolator module 30 as a digital isolator.

The signal isolator module 30 can be provided with energy/power supply inputs 32; 34 from the supply isolator module 50 and the receiver module/ECU 40.

Moreover, the signal isolator module 30 may be provided with a ground connection 35, preferably one ground connection 35 for each of the energy/power supply inputs 32; 34.

Further, the signal isolator module 30 comprises a signal input 36 and a signal output 38 for receiving (sensor) signals from the associated sender module/sensor 30 and forwarding/transmitting such signals to all of the receiver modules/ECUs 40.

Thus, according to Fig. 4 for the redundant power supply there is a plurality of supply inputs 32; 34 and a single signal output 38 forward converter, which can power its signal output 38 from its multiple supply inputs 32; 34 while inputs are being isolated from other supply/signal inputs 32; 34; 36 and the signal output 38 (see Fig. 4).

This example for digital signal isolator modules 30 shows that there are at least three main connections for both the sensor 20 and the ECU 40 side, containing two supply line 32; 34; 35 (one positive: supply+ and one negative terminal: ground) and one signal line input/output 36; 38.

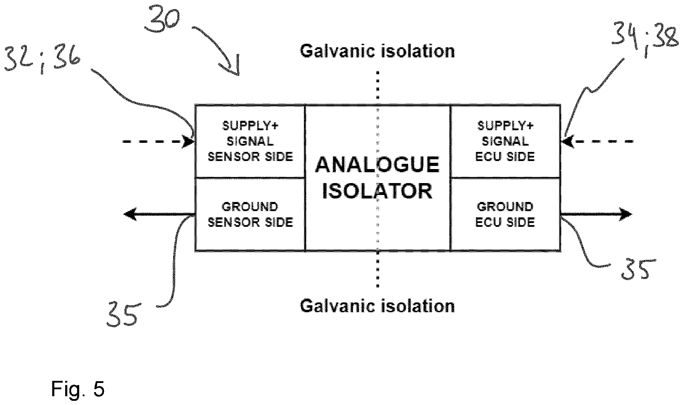

Fig. 5 shows an embodiment of a signal isolator module 30 as an analogue isolator.

In comparison to Fig. 4, the embodiment according to Fig. 5 comprises a combined port/input for the power supply input 32; 34 and the signal input/output 36; 38 respectively.

In such case, the power/energy supply to the supply and signal input 32; 36 can be implemented from the supply isolator module 50 and via the corresponding sender module/sensor 30.

This example for analogue signal isolator modules 30 shows that there are at least two main connections for both the sensor 20 and the ECU 40 side, containing a combined supply and signal line 32; 36; 34; 38, where the supply voltage contains the sensor data, and a respective ground line 35. An example for such analogue signal isolator modules 30 may be a LED-phototransistor integrated circuit.

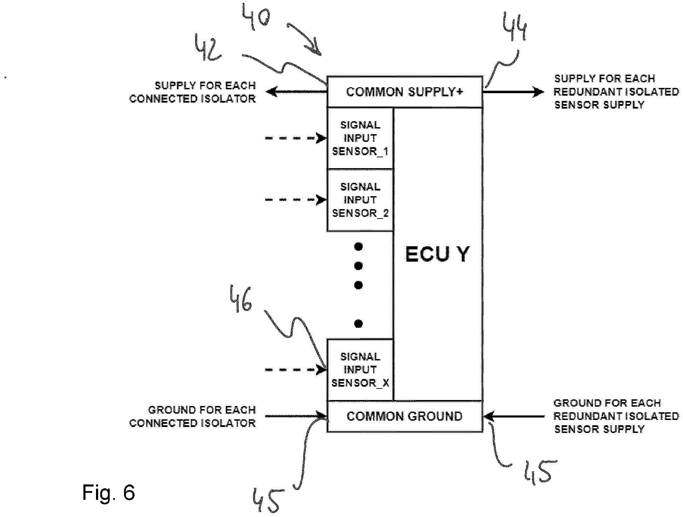

Fig. 6 illustrates an embodiment of a receiver module 40 comprising a common supply output (port) 44 and a common ground connection (port) 45 of the receiver module 40. Signal inputs 46 are provided as separated ports.

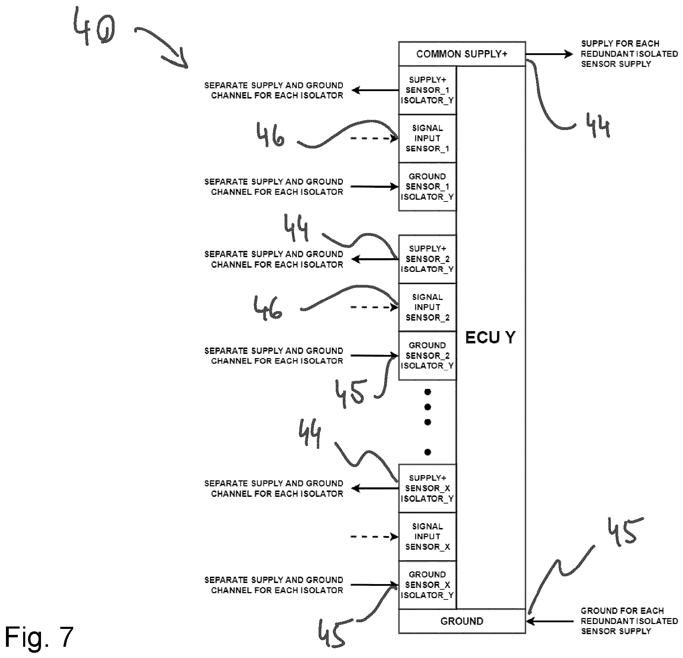

Fig. 7 shows an embodiment of a receiver module 40 comprising separate supply outputs 46 and separate common ground connection (ports) 45 of the receiver module 40 for each sender module 20/signal isolator module 30. Supply port 44 and ground port 45 for the supply isolator modules 50 may be a common one respectively.

Supplying the signal and supply isolator modules 30; 50 from the ECUs 40 can be done with separate supply and ground channels 44; 45. Preferably, one common supply port 44 and one common ground port 45 is provided.

In summary, by the present invention a system with and providing for a fully redundant architecture can be achieved, not only with respect to a redundancy of components and modules but also with respect to functionality by providing signals of all sender modules/sensors 20 to each of the receiver modules/ECUs 40, whereby a power/energy supply is provided by all of the receiver modules/ECUs 40 to all of the sender modules 20.

Moreover, the system's 10 architecture is further protected against failure by a redundant and complete (galvanic) isolation between the sender modules/sensors 20 and the receiver modules/ECUs 40, on the signal path/line/connection as well as on the power/energy supply path/line/connection by signal isolator modules 30 and the supply isolator modules 50.

Thus, the system 10 according to the present invention can avoid interferences by failing components and modules as well as ensure an uninterrupted operation of the system, being preferably embedded in a vehicle or the like.

### REFERENCE SIGNS

- 10: System
- 20: Sender module
- 22: Supply input
- 28: Signal output
- 30: Signal isolator module
- 32: Supply input (from sender module/supply isolator module)
- 34: Supply input (from receiver module)
- 35: Ground connection
- 36: Signal input
- 38: Signal output
- 40: Receiver module
- 42: Supply input
- 44: Supply output
- 45: Ground connection
- 46: Signal input
- 50: Supply isolator module
- 52: Supply input
- 54: Supply output
- 55: Ground connection

## Claims

1. System (10) with a redundant architecture, in particular for vehicles,
wherein the system (10) comprises a plurality of sender modules (20), a plurality of receiver modules (40) and a plurality of signal isolator modules (30),
wherein each receiver module (40) is configured to receive signals, in particular digital sensor signals or analogue sensor signals, from each of the sender modules (20),
wherein the sender modules (20) and the receiver modules (40) are isolated, in particular galvanically isolated, from each other by one of the signal isolator modules (30).

2. System (10) according to claim 1,
**characterized in that**
each of the signal isolator modules (30) is associated with one of the sender modules (20) respectively.

3. System (10) according to claim 1 or 2,
**characterized in that**
the system (10) comprises a plurality of supply isolator modules (50),
wherein one supply isolator module (50) is associated with one sender module (20) respectively.

4. System (10) according to claim 3,
**characterized in that**
each sender module (20) is configured to receive an energy supply via a supply connection from each of the receiver modules (40) via one of the plurality of supply isolator modules (50),
wherein such supply connection of each of the sender modules (20) is isolated, in particular galvanically isolated, from the plurality of the receiver modules (40) by one of the supply isolator modules (30).

5. System (10) according to one of the preceding claims,
**characterized in that**
the sender modules (20) are provided as sensors of the same or various types, wherein the receiver modules (40) are provided as electronic control units of the same or various types.

6. System (10) according to one of the preceding claims,
**characterized in that**
the number of sender modules (20) and receiver modules (40) is different, wherein the system (10) preferably comprises a larger amount of sender modules (20) than of receiver modules (40).

7. System (10) according to one of the preceding claims,
**characterized in that**
each receiver module (40) has one common supply output (42) or separate supply outputs (42) for supply connection with the plurality of supply isolator modules (50).

8. System (10) according to one of the preceding claims,
**characterized in that**
each receiver module (40) is provided with
- one common ground connection (44) or separate ground connections (44) for connection with the plurality of signal isolator modules (30) and/or
- one common ground connection (44) or separate ground connections (44) for connection with the plurality of supply isolator modules (50).

9. System (10) according to one of the preceding claims,
**characterized in that**
each signal isolator module (30) is supplied with energy by the plurality of receiver modules (40) via one supply isolator module (50) which is associated with the corresponding sender module (20).

10. System (10) according to one of the preceding claims,
**characterized in that**
each of the signal isolator modules (30) and/or the supply isolator modules (50) are provided as an analogue isolator or as a digital isolator, preferably to provide a galvanic isolation.

11. Receiver module (40) for a system (1) according to one of the preceding claims, wherein the receiver module (40) is preferable an electronic control unit.

12. Signal isolator module (20) for a system (1) according to one of the preceding claims, preferably providing a galvanic isolation.

13. Supply isolator module (50) for a system (1) according to one of the preceding claims, preferably providing a galvanic isolation.
